# FASCICULE DE BREVET EUROPEEN

(11) **EP 0 501 874 B1**
(45) Date de publication et mention de la délivrance du brevet: **13.09.1995**
(21) Numéro de dépôt: 92400484.9
(22) Date de dépôt: 25.02.1992
(51) Int. Cl.: F41H 5/04, B32B 15/01, C21D 9/42

(54) **Procédé de réalisation d'un produit plat composite, blindage inoxydable et réservoir blindé obtenus par ce procédé**
Verfahren zur Herstellung einer rostfreien Verbundpanzerplatte und nach dem Verfahren hergestellter Behälter
Procedure for the manufacturing of a plate composite product, stainless armour and an armoured reservoir obtained by that procedure

(30) Priorité: 01.03.1991 FR 9102496
(43) Date de publication de la demande: 02.09.1992
(73) Titulaire: CREUSOT-LOIRE INDUSTRIE, F-92800 Puteaux (FR)
(72) Inventeur: Leger, Jacques, F-71210 St Julien sur Dheune (FR); Roux, Rémi, F-71200 Le Creusot (FR); Schweitzer, Gilbert, F-71200 Le Creusot (FR)
(74) Mandataire: Bouget, Lucien

(56) Documents cités:
- FR-A- 2 106 939
- US-A- 2 438 759
- US-A- 2 874 082

## Description

L'invention est relative à un procédé de réalisation d'un produit plat composite constituant un blindage inoxydable ainsi qu'à un blindage et à un réservoir blindé obtenus par ce procédé.

Actuellement, les blindages sont réalisés à partir d'acier à très haute dureté mais qui ne sont pas prévus pour résister à la corrosion par des produits agressifs. Lorsqu'on veut réaliser des récipients ou réservoirs blindés destinés à contenir des fluides corrosifs et devant résister à la fois à des projectiles et à la corrosion par les fluides contenus, on utilise un acier de blindage que l'on met en forme par pliage et mécanosoudage, puis on revêt par peinture l'intérieur du réservoir ainsi constitué.

Cette technique présente au moins deux inconvénients :
- il est difficile de faire un revêtement de peinture homogène à l'intérieur d'un récipient et il y a toujours le risque que certaines parties soient mal protégées,
- les peintures ne résistent pas toujours bien à tous les fluides que l'on veut stocker.

On connaît par les US-A-2.438.759 et FR-A-2.106.939, des tôles de blindage obtenues par placage de tôles d'acier faiblement allié l'une sur l'autre. FR-A-2 106 939, qui est l'état de la technique le plus proche, décrit un procédé de réalisation d'un blindage plat composite et un blindage plat composite (cf. le préambule de la revendication 6). Après l'opération de placage, on peut réaliser un maintien en température pour assurer une bonne liaison métallurgique des tôles (US-A-2.438.759) ou une trempe depuis une température de 900 à 1050°C suivie d'un revenu (FR-A-2.106.939) du placage obtenu. Le produit plaqué résultant ne constitue pas un blindage inoxydable.

Le but de l'invention est de proposer un procédé permettant de réaliser un produit plat composite constituant un blindage inoxydable sur au moins une face et de réaliser des récipients présentant tout à la fois une bonne résistance à l'impact des projectiles et une bonne tenue à la corrosion.

L'objet de l'invention est un procédé de réalisation d'un produit plat composite constituant un blindage inoxydable, tel que décrit par la revendication 1.

L'objet de l'invention est également un blindage plat composite en acier inoxydable tel que décrit par la revendication 6.

De préférence, le placage de la tôle en acier inoxydable sur la tôle en acier de blindage est réalisé par colaminage, placage par explosion ou placage par explosion suivi d'un relaminage et la trempe est réalisée par une machine de trempe à l'huile, sous presse et suivie d'un revenu à une température comprise entre 200 et 600°C.

Ces blindages peuvent être réalisés avantageusement en utilisant comme matériau inoxydable de placage, un acier inoxydable du type 304 LN ou 316 LN (dénomination selon la norme AISI) et correspondant aux analyses chimiques suivantes :
C ≦ 0,03 %
0,2 % ≦ Si ≦ 1 %
Mn ≦ 2 %
8 % ≦ Ni ≦ 15 %
15 % ≦ Cr ≦ 20 %
Mo ≦ 2 %
N₂ ≧ 0,1 %
le reste étant du fer et des impuretés résultant de la fusion des matières premières.

De préférence, les aciers inoxydables utilisés sont du type "à bas carbone" 304 L et 316 L contenant moins de 0,03 % de carbone.

De préférence également, ces aciers contiennent plus de 0,1 % d'azote.

L'acier de blindage sur lequel est plaqué le matériau inoxydable contient :
au plus 0,6 % de carbone
au plus 2 % de silicium
au plus 5 % de manganèse
au plus 5 % de nickel
au plus 2 % de chrome
au plus 1 % de molybdène
au plus 1 % de vanadium
le reste étant du fer et des impuretés résultant de la fusion des matières premières.

L'acier de blindage utilisé selon le procédé objet de l'invention permet d'obtenir des blindages dont la dureté Brinell est comprise entre 250 HB et 700 HB ; ces blindages sont bien plans et présentent une excellente résistance à la perforation par un projectile et une bonne résistance à la corrosion sur une face.

L'invention concerne enfin des réservoirs réalisés à l'aide des blindages objet de l'invention ; ces réservoirs ayant une excellente résistance à la perforation par un projectile et étant capables de contenir, sans se corroder, des fluides corrosifs.

L'invention va maintenant être décrite plus en détail.

Pour réaliser des récipients blindés et résistant à la corrosion, il faut disposer d'un matériau associant de bonnes propriétés balistiques (résistance à la perforation par un projectile) et une bonne résistance à la corrosion. Un tel matériau n'existe pas. Par contre, on peut envisager, et c'est l'idée qui se trouve à la base de l'invention, d'avoir un matériau composite, sous forme de plaques ou de tôles, dont l'une des faces a des propriétés balistiques et l'autre face une bonne résistance à la corrosion.

Selon l'invention, un tel matériau est obtenu par la technique bien connue du placage d'un acier ou un alliage inoxydable convenablement choisi sur un matériau de blindage tel qu'un acier de blindage.

Ce placage est fait de façon connue soit par explosion, soit par explosion et relaminage soit encore par colaminage.

La difficulté provient de ce qu'il doit y avoir compatibilité entre les matériaux et plus particulièrement compatibilité entre les traitements thermiques que doivent subir les deux matériaux pour présenter chacun les caractéristiques d'emploi souhaitées.

L'acier de blindage doit avoir une très grande dureté et une bonne ductilité. La dureté recherchée se situe dans la fourchette de dureté Brinell 250 HB à 700 HB. Une telle dureté ne peut être obtenue que par un acier suffisamment chargé en carbone et en éléments d'alliage et ayant subi une trempe à partir d'une température pas trop élevée pour éviter de trop faire grossir le grain et de détériorer trop la ductilité ; ce traitement de trempe peut être suivi d'un revenu compris entre 200°C et 600°C.

L'acier inoxydable, pour présenter une bonne tenue à la corrosion, ne doit pas présenter de précipitations fines de carbures aux joints des grains. Pour éviter cette précipitation, on fait subir à cet acier, de façon connue, un traitement d'hypertrempe qui consiste en un réchauffage à une température telle que tous les carbures soient mis en solution puis on refroidit rapidement l'acier ; cette température de mise en solution est en général très élevée.

Il y a donc une première condition de compatibilité qui est que la température de mise en solution des carbures de l'acier inoxydable ne soit pas trop élevée pour que l'on puisse faire simultanément le traitement d'hypertrempe de l'acier inoxydable et le traitement de trempe de l'acier de blindage. Pour celà, on a constaté qu'il suffisait que la température de mise en solution des carbures de l'acier inoxydable soit inférieure à 1000°C.

Cette condition conduit à utiliser des aciers du type 304 LN ou 316 LN (selon la norme AISI). Ce sont des aciers dont la composition chimique est caractérisée par les inégalités suivantes :
C ≦ 0,03 %
0,2 % ≦ Si ≦ 1 %
Mn ≦ 2 %
8 % ≦ Ni ≦ 15 %
15 % ≦ Cr ≦ 20 %
Mo ≦ 2 %
N₂ ≧ 0,1 %
le reste étant du fer et des impuretés résultant de la fusion des matières premières.

L'acier de blindage est, quant à lui, un acier qui, après trempe et éventuellement revenu entre 200°C et 600°C permet d'obtenir des duretés comprises entre 250 HB et 700 HB.

Sa composition chimique est caractérisée par le fait qu'il comporte une forte teneur en carbone pour obtenir une très grande dureté mais au plus 0,6 % de cet élément. Il comporte également :
au plus 0,2 % de silicium
au plus 5 % de manganèse
au plus 5 % de nickel
au plus 2 % de chrome
au plus 1 % de molybdène
au plus 1 % de vanadium
tous ces éléments ont pour but d'augmenter la trempabilité et d'obtenir à la fois une grande dureté et une ductilité satisfaisante.

Lorsqu'on trempe un matériau composite comme celui qui vient d'être décrit, les dilatations ou contractions des deux matériaux ne sont pas les mêmes et l'ensemble se comporte comme un bilame.

Pour obtenir une bonne planéité de la tôle plaquée après trempe, on effectue de préférence cette opération dans une machine de trempe sous presse qui maintient la tôle bien plane pendant la trempe, ce qui limite la déformation résiduelle à une flèche de moins de 6 mm/mètre alors que par une trempe classique, la déformation correspond à des flèches supérieures à 10 mm/mètre. Or, l'acier de blindage étant très dur, le planage d'une tôle ainsi déformée est très difficile à réaliser.

Cette trempe est réalisée après un réchauffage à une température inférieure à 1000°C et de préférence supérieure à 900°C en immergeant la tôle dans de l'huile.

Avec de telles températures de réchauffage on met bien en solution les carbures de l'acier inoxydable et on évite un trop fort grossissement du grain de l'acier de blindage.

La trempe à l'huile a l'avantage, par rapport à la trempe à l'eau, de limiter les risques de tapures au cours de la trempe.

La compatibilité des traitements thermiques est l'élément principal à prendre en compte.

Cependant, à l'interface entre l'acier inoxydable et l'acier de blindage, il y a diffusion de carbone du blindage vers l'acier inoxydable. Cette diffusion qui enrichit l'acier inoxydable en carbone au voisinage de la zone de jonction entre les deux métaux peut être préjudiciable à la qualité de la liaison.

C'est pour cela qu'on utilise des aciers inoxydables à bas carbone caractérisés par une teneur en carbone inférieure à 0,03 %.

Ainsi, la recarburation au voisinage de la zone de jonction est limitée.

Enfin, et pour éviter la formation de précipités de phase σ dans l'acier inoxydable, précipités préjudiciables à ses caractéristiques mécaniques de ductilité, donc à son aptitude à la mise en forme, on stabilise cet acier inoxydable en imposant une teneur en azote supérieure ou égale à 0,1 %.

Les blindages inoxydables obtenus par le procédé de l'invention qui se présentent sous la forme d'un produit composite plan comportent une couche de base trempée en acier de blindage dont la dureté Brinell est comprise entre 250 et 700 HB et une couche de revêtement plaquée sur la couche de base en acier inoxydable exempte de précipités de carbures aux joints de grains.

Les blindages inoxydables ainsi obtenus et objet également de l'invention permettent de fabriquer des réservoirs à la fois blindés et capables de contenir des fluides corrosifs.

Pour réaliser ces réservoirs on prend un blindage selon l'invention et par pliage et mécanosoudure on réalise un récipient dont la face interne est en acier inoxydable et donc résiste à la corrosion, et la face externe en acier à blindage et ainsi résiste à l'impact de projectiles.

## Revendications

1. Procédé de réalisation d'un produit plat composite constituant un blindage inoxydable, sur une de ses faces, dans lequel on réalise le placage d'une tôle en un acier inoxydable dont la température de remise en solution des carbures est inférieure à 1000°C sur une tôle en acier de blindage, et on trempe la tôle plaquée obtenue de manière que la dureté Brinell de l'acier de blindage soit comprise entre 250 et 700 HB aprés avoir réchauffé ladite tôle à une température inférieure à 1000°C et de préférence supérieure à 900°C.

2. Procédé suivant la revendication 1, caractérisé en ce que le placage de la tôle d'acier inoxydable sur la tôle en acier de blindage est réalisé par l'un des procédés suivants : colaminage, placage par explosion, placage par explosion suivi d'un relaminage.

3. Procédé suivant l'une quelconque des revendications 1 et 2, caractérisé par le fait qu'on effectue un revenu à une température comprise entre 200 et 600°C sur la tôle plaquée et trempée.

4. Procédé suivant l'une quelconque des revendications 1 à 3, caractérisé en ce qu'on effectue une trempe à l'huile de la tôle plaquée.

5. Procédé suivant la revendication 4, caractérisé en ce que la trempe à l'huile est effectuée dans une machine de trempe à l'huile sous presse.

6. Blindage inoxydable réalisé selon le procédé décrit dans une des revendications 1 à 5 constitué sous la forme d'un produit plat composite comportant une couche de base en acier de blindage et une couche de revêtement plaquée sur la couche de base, caractérisé en ce que ladite couche de base est trempée et présente une dureté Brinell comprise entre 250 et 700 HB et en ce que la couche de revêtement est en acier inoxydable exempte de précipités de carbures aux joints de grains.

7. Blindage inoxydable suivant la revendication 6, caractérisé en ce que l'acier inoxydable est un acier du type 304 ou 316 (norme AISI) renfermant en proportions pondérales :
C ≦ 0,03 %
0,2 % ≦ Si ≦ 1 %
Mn ≦ 2 %
8 % ≦ Ni ≦ 15 %
15 % ≦ Cr ≦ 20 %
Mo ≦ 2 %
N₂ ≧ 0,1 %
le reste étant du fer et des impuretés résultant de la fusion des matières premières.

8. Blindage suivant l'une quelconque des revendications 6 et 7, caractérisé en ce que l'acier de blindage renferme en proportions pondérales :
au plus 0,6 % de carbone
au plus 2 % de silicium
au plus 5 % de manganèse
au plus 5 % de nickel
au plus 2 % de chrome
au plus 1 % de molybdène
au plus 1 % de vanadium
le reste étant du fer et des impuretés résultant de la fusion des matières premières.

9. Réservoir blindé comportant une paroi résistant à la perforation par un projectile et à la corrosion par des produits corrosifs sur sa surface interne, caractérisé par le fait que la paroi est réalisée par mise en forme et soudage d'un produit plat composite constituant un blindage selon une des revendications 6 à 8 et comportant une couche de base trempée en acier de blindage ayant une dureté Brinell comprise entre 250 HB et 700 HB et une couche de revêtement plaquée sur la couche de base en un acier inoxydable exempt de précipités de carbures aux joints de grains.

## Claims

1. Process for producing a flat composite product with a non-oxidising armour plating on one of its faces, wherein a sheet of a stainless steel of which the temperature for returning the carbides to solution is less than 1000°C is plated onto a sheet of armour steel, and the plated sheet obtained is quenched after said sheet has been heated to a temperature below 1000°C, preferably above 900°C, so that the Brinell hardness of the armour steel is in the range of between 250 and 700 HB.

2. Process according to Claim 1, characterised in that plating of the stainless steel sheet onto the armour steel sheet is carried out by one of the following processes: combined rolling, explosion plating, explosion plating followed by re-rolling.

3. Process according to either of Claims 1 and 2, characterised in that tempering is carried out on the plated and quenched sheet at a temperature in the range of between 200 and 600°C.

4. Process according to any one of Claims 1 to 3, characterised in that the plated sheet is subjected to oil hardening.

5. Process according to Claim 4, characterised in that the oil hardening is carried out in a pressing oil hardening machine.

6. Non-oxidising armour plating produced according to the process outlined in one of Claims 1 to 5 in the form of a flat composite product comprising a base layer of armour steel and a plated covering layer on the base layer, characterised in that said base layer is quenched and has a Brinell hardness in the range of between 250 and 700 HB, that the covering layer is made of a stainless steel free from carbide precipitations on its grain boundaries.

7. Non-oxidising armour plating according to claim 6, characterised in that the stainless steel is a steel of the type 304 or 316 (AISI standard) containing the following in gravimetric proportions
C ≦ 0.03%
0.2% ≦ Si ≦ 1%
Mn ≦ 2%
8% ≦ Ni ≦ 15%
15% ≦ Cr ≦ 20%
Mo ≦ 2%
N₂ ≧ 0.1%
the remainder being iron and impurities resulting from the fusion of raw materials.

8. Plating according to either of Claims 6 and 7, characterised in that the armour steel contains the following in gravimetric proportions:
at maximum 0.6% carbon
at maximum 2% silicon
at maximum 5% manganese
at maximum 5% nickel
at maximum 2% chromium
at maximum 1% molybdenum
at maximum 1% vanadium
the remainder being iron and impurities resulting from the fusion of raw materials.

9. Armour plated bath comprising a wall resistant to perforation by a projectile and to corrosion by corrosive products on its internal surface, characterised in that the wall is produced by moulding and welding a flat composite product to form an armour plating according to one of Claims 6 to 8 and comprising a quenched base layer of armour steel with a Brinell hardness in the range of between 250 HB and 700 HB and a plated covering layer on the base layer made of a stainless steel free from carbide precipitations on its grain boundaries.

## Patentansprüche

1. Verfahren zur Herstellung einer Verbundplatte, die eine Panzerung darstellt, welche auf einer ihrer Seiten rostfrei ist, bei dem man ein rostfreies Stahlblech, dessen Temperatur, bei der die Carbide wieder in Lösung gebracht werden, kleiner als 1000°C ist, auf ein Stahlpanzerblech plattiert und das erhaltene plattierte Blech härtet, so daß die Brinellhärte des Panzerstahls zwischen 250 und 700 HB liegt, nachdem das Blech auf eins Temperatur unter 1000°C und vorzugsweise über 900°C erwärmt wurde.

2. Verfahren nach Anspruch 1, dadurch gekennzeichnet, daß das rostfreie Stahlblech durch eines der folgenden Verfahren auf den Panzerstahl plattiert wird: Walzplattieren, Explosionsplattieren, Explosionsplattieren gefolgt von Umwalzen.

3. Verfahren nach einem der Ansprüche 1 oder 2, dadurch gekennzeichnet, daß das plattierte und gehärtete Blech bei einer Temperatur zwischen 200 und 600°C angelassen wird.

4. Verfahren nach einem der Ansprüche 1 bis 3, dadurch gekennzeichnet, daß man das plattierte Blech ölhärtet.

5. Verfahren nach Anspruch 4, dadurch gekennzeichnet, daß die Ölhärtung in einer Vorrichtung zur Ölhärtung unter Druck durchgeführt wird.

6. Rostfreie Panzerung, die nach einem Verfahren gemäß einem der Ansprüche 1 bis 5 hergestellt wurde und in Form einer Verbundplatte vorliegt, die aus einer Panzerstahl-Grundschicht und einer darauf plattierten Auflageschicht besteht, dadurch gekennzeichnet, daß die Grundschicht gehärtet ist und eine Brinellhärte zwischen 250 und 700 HB aufweist und daß die Auflageschicht ein rostfreier Stahl ist, der an den Korngrenzen frei von ausgefallenen Carbiden ist.

7. Rostfreie Panzerung nach Anspruch 6, dadurch gekennzeichnet, daß der rostfreie Stahl ein Stahl des Typs 304 oder 316 (AISI-Norm) ist, der, bezogen auf das Gewicht:
C ≦ 0,03 %
0,2 % ≦ Si ≦ 1 %
Mn ≦ 2 %
8 % ≦ Ni ≦ 15 %
15 % ≦ Cr ≦ 20 %
Mo ≦ 2 %
N₂ ≧ 0,1 %
enthält, wobei der Rest Eisen ist sowie Verunreinigungen, die aus dem Schmelzen der Einsatzmaterialien stammen.

8. Panzerung nach einem der Ansprüche 6 oder 7, dadurch gekennzeichnet, daß der Panzerstahl, bezogen auf das Gewicht:
höchstens 0,6 % Kohlenstoff
höchstens 2 % Silicium
höchstens 5 % Mangan
höchstens 5 % Nickel
höchstens 2 % Chrom
höchstens 1 % Molybdän
höchstens 1 % Vanadium
enthält, wobei der Rest Eisen ist sowie Verunreinigungen, die aus dem schmelzen der Einsatzmaterialien stammen.

9. Gepanzerter Behälter, der eine Wand aufweist, die gegen eine Durchbohrung durch ein Projektil und gegen Korrosion gegenüber korrosiven Materialien auf der Innenfläche beständig ist, dadurch gekennzeichnet, daß die Wand durch Formung und Verschwißen einer Verbundplatte hergestellt worden ist, die eine Panzerung gemäß einem der Ansprüche 6 bis 8 darstellt und eine gehärtete Grundschicht aus einem Panzerstahl mit einer Brinellhärte zwischen 250 und 700 HB und eine darauf aufgebrachen Auflageschicht aus einem rostfreien Stahl umfaßt, der an den Korngrenzen frei von ausgefallenen Carbiden ist.
